Europäisches Patentamt

European Patent Office

Office européen des brevets

(11) Publication number: **0 266 120**
**A2**

# (12) EUROPEAN PATENT APPLICATION

(21) Application number: **87309293.6**

(22) Date of filing: **21.10.87**

(51) Int. Cl.⁴: **G02B 27/00 , G02B 27/18**

(30) Priority: **31.10.86 US 926355**

(43) Date of publication of application:
**04.05.88 Bulletin 88/18**

(84) Designated Contracting States:
**BE DE FR GB IT NL SE**

(71) Applicant: **AMERICAN TELEPHONE AND TELEGRAPH COMPANY**
**550 Madison Avenue**
**New York, NY 10022(US)**

(72) Inventor: **Streibl, Norbert**
**3304 Willow Drive**
**Ocean Township New Jersey 07712(US)**

(74) Representative: **Watts, Christopher Malcolm Kelway, Dr. et al**
**Western Electric Company Limited 5,**
**Mornington Road**
**Woodford Green Essex, IG8 0TU(GB)**

(54) **Generating an array of light spots having uniform intensity.**

(57) A light-efficient optical system for developing a plurality of equal-intensity light spots on a selected surface. The system includes means (10) for breaking up an input beam of coherent light (5) into a plurality of "beamlets", means (30) for appropriately interfering the developed beamlets, and a surface (20) for developing thereon an interference pattern of light spots of essentially equal intensity.

FIG. 5

**GENERATING AN ARRAY OF LIGHT SPOTS HAVING UNIFORM INTENSITY**

Technical Field

This invention relates to optical computing.

Background of the Invention

To design an optical digital computer, it is essential to have a cascadable logic gate with a fan-in and a fan-out of at least two. An optical gate can be realized with any device that is capable of developing an output light intensity that is a sigmoid function of the input light intensity. To operate such a gate, one must only bias it appropriately close to the lower or upper knee of the sigmoid function, and allow for an input light stimulus to move the gate from one output state to the next. To provide for a high fan-in capability, the bias light must bring the gate very close to the threshold, and that can be achieved safely only if the bias light is well controlled.

In electronic circuits, each gate is biased as necessary via electrical paths connected to the appropriate spots in the circuits. In optics this is much more difficult, particularly if one wishes to direct some arbitrarily assigned amounts of light to different specific spot. The difficulty of this task is reduced, however, when one is willing to apply the bias light to a plane surface and when one is willing to accept one level of bias throughout. Actually, a predefined constant bias level is also a requirement that arises from the need for uniformity of design and manufacturability and from the need for predictability of performance. It is easier to design computing arrays with gates of equal size and characteristics, and that implies a constant and equal bias. In any event, the bias light intensities at different locations must be controllable by the designer and not by some uncontrolled consequence of the optical system. As for the self-imposed simplification of applying the bias light to a plane surface, that is not an absolute requirement, although it is expected that optical computers will use two-dimensional arrays of optical devices to take advantage of computational parallelism, and it is easier to create such devices on a plane surface. Such a construction requires a planar bias light array.

The task, therefore, is to develop a plurality of equal intensity bias light spots at a selected plane surface.

It goes almost without saying that in designing optical computers one would not employ a large plurality of light sources, just as in electronic computers one would not employ a large plurality of power sources. With that in mind, the task of developing bias light spots reduces to a task of developing a plurality of light spots from a single light source.

To develop light spots of equal intensities from a single light source, one would normally split a light beam into component light beams and direct the component light beams to the desired positions. This is known as geometrical beam splitting. Geometrical beam splitting requires that the light source possessing a flat intensity profile or, stated in other words, that is possess a uniform intensity at any plane perpendicular to the direction of the light beam. The intensity of even coherent light, however, is not uniform with present day technologies. It has a generally Gaussian profile. Another approach is physical beam splitting through, for example, beam splitters. This, however, requires "binary trees" of beam splitters; but such trees are difficult to construct because introduced errors propagate and accumulate. The result is that neither the locations of the resulting light spots nor their intensities are easily controlled.

The problem of nonuniform intensity profile can be ameliorated with apparatus such as described by J. L. Kreuzer in U. S. Patent No. 3,476,463, issued November 4, 1969, where a beam of uniform intensity is produced by passing it through a lens that follows precisely the intensity profile of the beam. Clearly, this is a difficult and therefore less than satisfactory solution; particularly since each individual beam may not be exactly Gaussian, and the profile of even a Gaussian beam changes with time.

The literature also reports on systems that develop a collection of light spots from a single light source. U. S. Patent No. 3,476,463 issued November 4, 1969 to J. L. Kreuzer; U. S. Patent No. 3,584,948 issued June 15, 1971 to D. R. Herriott; "Binary Phase Grating for Star Couplers with High Splitting Ratio", U. Killat et al, Fiber and Integrated Optics, February 4, 1982, pp. 159-167; and U. S. Patent No. 4,362,359 issued December 7, 1982 to H. Dammann et al are examples of such systems. These systems develop the desired light spots by passing a coherent light source through a diffraction plate (or a hologram emulating a diffraction plate) and creating an interference pattern on a plane surface from the different phase diffracted light waves produced by the grating means.

The problem that is common to all of the systems described by the above references is that the resultant light intensities of the different spots are not identical. The reason for that is that the developed spots relate to the Fourier transform of the grating pattern. The grating pattern, most commonly employed is periodic and is made up of mere phase shifts. The developed phase shift has the shape of a square wave, and a square wave has a transform whose coefficients are not of equal magnitude. In trying to equalize the spot intensities, Killat et al in the aforementioned Fiber and Integrated Optics article break up the "square wave" of the periodic grating with its phase transitions into a "train of pulses" with corresponding plurality of 180° phase transitions. The location of the phase transitions must be computed with numerical techniques, however relying on the method of the augmented Lagrangian function, and it is very difficult to extend this beyond a few diffraction orders. This is true from two standpoints: computing the required gradings with sufficient accuracy, and realizing the calculated gradings with sufficient fidelity.

## Summary of the Invention

A better solution to the task of developing a plurality of light spots of essentially equal magnitudes is achieved, in accordance with my invention, in a light-efficient way by an optical system in which an input beam of coherent light is broken up into a plurality of "beamlets", and the beamlets are appropriately interfered and thus transformed to produce spots of essentially equal intensity on a receiver surface.

In one preferred embodiment the beamlets are generated by passing the input beam of coherent light through an array of small lenses (lenslet array), developing thereby an array of point light sources in a plane that is removed a distance $f$ from the lenslet array, where $f$ is the focal length of the lenslets. In another preferred embodiment the source light beam is passed through an appropriately designed holographic plate which acts as an array of holographic lenses.

The rays emanating from the point light sources impinge on a receiving surface that is positioned at an appropriate distance, the develop thereon an interference pattern that results in a plurality of light spots. The distance of the receiving surface from the place of the light sources is approximately $d^2/2m\lambda$ where d is the distance between the developed light sources, $\lambda$ is the wavelength of the light source, and m is an integer.

In still another preferred embodiment, a large lens having a focal length F (on both sides, for sake of simplicity) is placed distance F from the plane of the developed light sources and the receiving plate is positioned a distance of 2F from the developed light sources.

The features and advantages of my invention can be more fully appreciated from the following detailed description considered together with the accompanying drawings wherein:

## Brief Description of the Drawing

FIG. 1 depicts an embodiment of my invention comprising an array of lenses for developing a plurality of interfering light beamlets;

FIG. 2 is a front view of surface 10 in FIG. 1;

FIG. 3 is a front view of surface 20 in FIG. 1;

FIG. 4 depicts an embodiment comprising a holographic plate for developing a plurality of interfering light beamlets; and

FIG. 5 depicts an embodiment comprising an array of lenses followed by a single collimating lens for developing a plurality of interfering light beams.

## Detailed Description

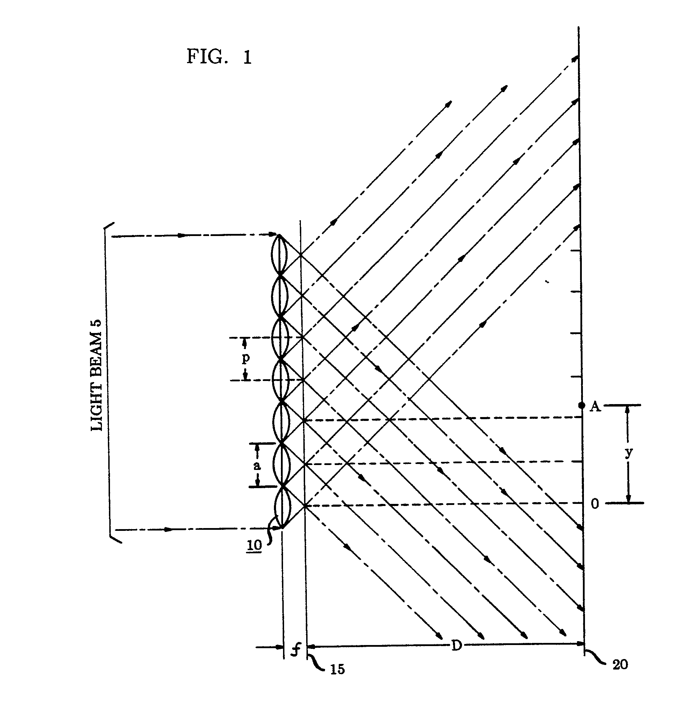

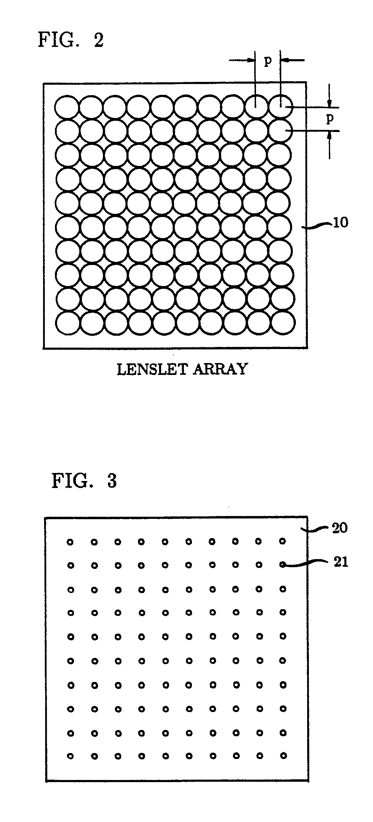

FIG. 1 presents one embodiment of my invention, and it comprises a lenslet array 10 situated a distance D plus $f$ from a plane surface 20 and being illuminated by a beam of essentially coherent and collimated light. Lenslet array 10 is shown in its side view FIG 1, as a row of lenses. The front view of array 10, shown in FIG. 2 appears as a two-dimensional array of lenses.

The light beam illuminating lenslet array 10 is shown in FIG. 1 on the left of the array, while plane surface 20 is shown to the right of the array. Of course, the light beam is wide enough to encompass all the lenslets in array 10. The individual lenses within array 10 have a diameter a, a focal length $f$, and a separation distance p. The distance p (with refractive materials) is at least equal to a. In operation, light beam 5 is divided into individual beamlets by each lenses In array 10. The parallel light rays of the applied beam pass through the lenses in array 10, and each of the lenses focuses its beamlet at a point that is a distance $f$ to the right of the lenses, wherefrom each of the beamlets expands into a cone of rays, as the rays continue toward surface 20. The expanding cones interfere with one another in a conventional and well-known manner, and it can be shown that the intensity of light at any point, A on surface 20 is related to a sum of light signals from each of the beamlets, which is light signals possess a particular phase that is related to the distance D, the lens separation p, the wavelength of light beam 5, $\lambda$, and the position of point A on surface 20.

More specifically and with reference to FIG. 1, the light intensity at point A which is one surface 20 and is situated a distance y from the lowest lenslet, has an intensity that is related to the amplitude

$$I_A = \sum_{i=1}^{N} I_i e^{-j\frac{2\pi D}{\lambda}} \cdot e^{j\frac{2\pi}{\lambda}[(y-ip)^2 + D^2]^{1/2}} . \tag{1}$$

When the various parameters of Equation (1) are properly selected, the different component signals in the sum will add coherently, or almost coherently, at some locations on surface 20, and at such locations of point A the sum yields a large value, i.e., a high light intensity. Prefect coherence is attained when $[(y-ip)^2 + D^2]^{\frac{1}{2}}$ is some multiple of $\lambda$ for all $1 \leq i \leq N$, or $[(y-ip)^2 + D^2]^{\frac{1}{2}} = m_i\lambda$.

When D is much larger than y, a reasonable approximation of the interference pattern yields the simpler equation

$$I_A = \sum_{i=1}^{N} I_i e^{j\frac{2\pi}{\lambda}[(y-ip)^2/2D]} \tag{2}$$

and, clearly, the equation $(y-ip)^2 = 2Dm_i\lambda$ cam easily be satisfied. One solution, for example, is when $D = p^2/2\lambda$, the point under consideration, A, is a $y = m_0 p$, and therefore, $m_i = (m_0 - i)^2$.

The above shows that the structure of my invention as described by FIG. 1 attains spots of high light intensity at the points where the interference pattern of the point light sources emanating from plate 15 results in coherent addition. To the extent that this coherence is not perfect because surface 20 is a plane and the interfering rays have a spherical wavefront, the deviation can be made sufficiently small when D is made sufficiently large.

In the context of optical computing and bias requirement of optical gates, surface 20 may be part of an optical material upon which there are gate areas or other nonlinear optical or optoelectronic devices adapted to receiving the bias light. This is shown, by way of example, in FIG. 3 by circles 21. Since circles 21 have a discernible area, it is acceptable to have slight deviations in the registration of circles 21, vis-a-vis the locations of points of coherent light addition at surface 20. Moreover, the same relaxation can be applied to the requirement of perfect coherence. When coherence is somewhat less than perfect, the light spots at surface 20 simply spread a bit around the neighborhood of the points of coherence.

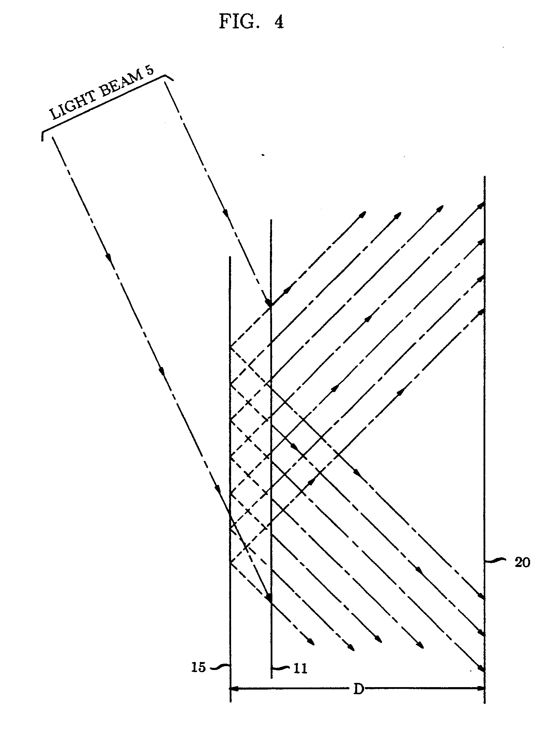

FIG. 4 depicts another embodiment of my invention which employs a holographic plate 11 instead of lenslet array 10. Light beam 5 passes through holographic plate 11 where appropriate wavefronts are generated. A reasonable treatise of the holographic arts is found in Optical Holography, (Academic Press, 1971) by R. J. Collier p. 605. With a properly designed holographic plate 11, the result is virtual planar array of light sources appearing at some distance away from the holographic plate, as depicted in FIG. 4 by line 15. Surface 20 is at a distance D away from the plane represented by line 15. An array of light spots is developed on surface 20 as in the FIG. 1 embodiment. It may be noted in passing that with holographic plates the distance p does not have to be greater than or equal to A.

It should be appreciated that in both the FIG. 1 and FIG. 4 embodiments can light spot on surface 20 is a sum of phase shifted portions from each of the point sources at plane 15. The phase shifts, however, are all multiples of $2\pi$ and, therefore, the intensities of the light spots on surface 20 at the points of coherence are essentially identical.

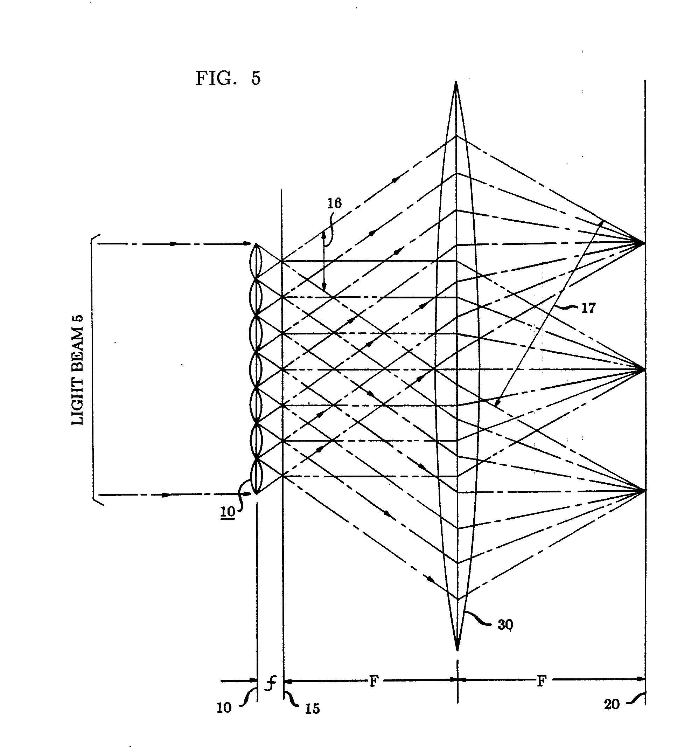

FIG. 5 represents an even more accurate embodiment for generating a plurality of light spots at surface 20 that are essentially of equal magnitude. As in FIGS. 1 and 4, the FIG. 5 embodiment includes means for developing a plane of point light sources. These means are shown as an array of lenses akin to the array of lenses in the FIG. 1 embodiment. The FIG. 5 embodiment differs from the FIG. 1 embodiment in that a lens 30, much larger than the lenslets in array 10, is interposed between the lenslet array and plane surface 20. When lens 30 is symmetric (and possesses a focal length F on both sides), the distance D of the FIG. 1 embodiment is changed to 2F, and lens 30 is placed a distance F away from surface 20. This is not absolutely necessary, but such positioning essentially eliminates all errors that appear in the FIG. 1 embodiment due to the fact that the wavefronts are spherical.

In operation, each cone of light rays contributed by a lenslet in array 10, e.g., 16 passes through lens 30 and therein it is converted to a collimated beam, e.g., 17. The light output at surface 20 is now the result of interference between planar lightwave fronts (as compared to spherical lightwave fronts in the FIGS. 1 and 4 embodiments). The result is that the light signals at plane surface 20 correspond to the Fourier transform of the light sources at plane 15. This phenomenon, of the interference patter of one focal plane being the Fourier transform of the light pattern at the other focal plane, is well known and is discussed, for example, by H. A. Haus in "Waves and Fields in Optoelectronics," Section 4.4, pp. 95-99 and 103-104, Prentice Hall, 1984.

In light of the above, it becomes quite clear that the interference pattern at surface 20 is a collection of light spots. The light at the left focal plane of the FIG. 5 embodiment is a spatial collection of point light sources (impulses), and the transform of impulses that are uniformly spaced is a collection of coefficients that are related to that spacing.

The above statement does not explicitly address the question of unequal intensities of the various lenslets. In fact, the lenslet array produces an array of spots s(x) which are modulated by the wide Gaussian envelope g(x) of the illuminating beam (5) Mathematically, that can be expressed by

$$u(x) = g(x) \sum_{n=-\infty}^{\infty} s(x - np). \qquad (3)$$

The diffraction pattern in the Fourier plane if then given by:

$$U(\mu) = \sum_{n=-\infty}^{\infty} S(\frac{n}{p})G(\mu - \frac{n}{p}) \qquad (4)$$

where $S(\mu)$ and $G(\mu)$ denote the Fourier transforms of the functions s(x) and g(x) with the spatial frequency $\mu$ -x/$\lambda$F. Since s(x) is the point spread function of an individual lenslets of the lenslet array, $S(\mu)$ is the pupil function of this lens. Therefore, $S(\mu)$ has a constant amplitude up to a certain limit, when is given by the transmission through the aperture of the lens. $G(\mu)$ is a very narrow Gaussian function, since it is the Fourier transform of a wide one. Consequently, the diffraction pattern at surface 20 consists of an array of Gaussian spots (due to the illumination with a Gaussian beam), which is limited by a nearly rectangular envelope function (given by the aperture of a single lenslet of the lenslet array). More quantitatively, the width of each individual spot $\delta x$ is inversely proportional to the width w of the illuminated area of the lenslet array (the width of the Gaussian laser beam) in accordance with

$$\delta x = \frac{\lambda F}{\omega} \qquad (5)$$

and the diameter of the whole array is

$$\Delta x = a \frac{F}{f}. \tag{6}$$

The distance Z between the spots in plane 20 depends on the period, p, of the lenslet array

$$Z = \frac{\lambda F}{p}. \tag{7}$$

Therefore the number N of spots depends only on the properties of the lenslet array and not on the focal length F of the Fourier lens

$$N = \frac{\Delta x}{Z} = \frac{ap}{\lambda f}. \tag{8}$$

As is shown by Equation (5) the achievable resolution of the spots is ultimately limited by the field and the aperture of the Fourier lens. Of course, the spot pattern can be arbitrarily magnified or demagnified by a lens with a sufficiently large aperture.

As mentioned above, it is not necessary to use a lenslet array. Any periodically repeated object will generate a discrete set of dots in the Fourier plane. If the spectrum of the elementary cell is "white" (constant absolute value), then the spots will be equally bright. If the elementary cell has only a phase structure, no light is lost by absorption. Hence, for example, a periodically repeated "ideal groundglass" might do, as well as a holographic plate, or a diffraction plate of the type suggested by Killat et al.

The apparatus of my invention requires very conventional components except, perhaps, for lenslet array 10. Lenslet array 10 can be constructed, however, in accordance with the teachings of: "Photolytic Technique for Producing Microlenses in photosensitive Glass," by N. F. Borrelli et al, Applied Optics , Vol. 24, 1985, p. 2520; "Distributed-index Planar Microlens and Stacked Planar Optics: a Review of Progress", by K. Iga and S. Misawa, Applied Optics , Vol. 25, No. 19, October 1986, pp. 3388-3396; "Spherical Gradient-index Sphere Lens", by Y. Koike, Y. Sumi and Y. Ohtsuka, Applied Optics , Vol. 25, No. 19, October 1986, pp. 3356-3363; "SELFOC News", Vol. 5, No. 1, May 1985; and "The Theory and Design of the SELFOC Lens", SELFOC Fiber Optics Devices , Vol. 5, No. 1, May 1985.

The development of an appropriate pattern on holographic plate 11 (if that is the implementation desired), can be done in one of two ways: by setting up a plane of light sources (e.g., by passing a laser light through pinholes) and interfering those light sources with that laser light, or by computer simulation of the interference pattern that would be developed with an ideal setup. With the first technique care must be taken because an inhomogeneous recording beam would yield an inhomogeneous reconstruction.

With the realization that the interference patter at surface 20 can be made to correspond to the Fourier transform of the light sources' spatial pattern, it becomes possible to create whatever light pattern is desired by, effectively, reverse engineering the pattern at plane 15 from the desired pattern at surface 20.

**Claims**

1. An optical system CHARACTERIZED BY:
first means responsive to an applied beam of mostly coherent light, for developing a plurality of beamlets from different parts of said applied beam, with phase and spatial positioning of each beamlet of said plurality of beamlets arranged so that the Fourier transform of said plurality of beamlets is a set of coefficients having essentially equal magnitudes;
second means for interfering said beamlets; and
third means for developing an interference pattern of said interfering beamlets.

2. The optical system of claim 1, wherein said third means includes a surface having at least one optical device.

3. The optical system of claim 1, wherein said third means includes a surface having an array of optical devices.

4. The optical system of claim 1, wherein said first means comprises hologram reproducing means.

5. The optical system of claim 1, wherein said first means comprises fourth means for developing a plurality of essentially point light sources appearing at a preselected surface.

6. The optical system of claim 5 wherein said surface is a plane.

7. The optical system of claim 1, wherein said first means comprises fourth means for developing a light pattern at a preselected plane, with the Fourier transform of said light pattern characterized by a plurality of coefficients having essentially equal values.

8. The optical system of claim 1 further CHARACTERIZED IN THAT:

said first means develops a plurality of essentially point light sources appearing at a first preselected plane; and

said second means includes means for developing a Fourier transform at a second preselected plane of said light sources appearing at said first preselected plane.

9. The system of claim 8 wherein said means for developing a Fourier transform is a lens having a focal length $F_1$ on a first side of said lens and a focal length $F_2$ on a second side of said lens.

10. The system of claim 9 wherein said lens is interposed between said first means and said third means, so that said first side of said lens is positioned a distance $F_1$ from said first preselected plane and said second side of said lens is positioned a distance $F_2$ from said second preselected plane.

11. The optical system of claim 1, wherein said first means holographically produces said plurality of beamlets.

# FIG. 1

FIG. 2

LENSLET ARRAY

FIG. 3

FIG. 4

FIG. 5